# EUROPEAN PATENT APPLICATION

(11) **EP 4 492 223 A1**
(43) Date of publication of application: **15.01.2025**
(21) Application number: 22930576.8
(22) Date of filing: 27.10.2022
(51) Int. Cl.: G06F 8/65

(54) **OTA POWER-ON REFRESH CONTROL METHOD AND SYSTEM FOR VEHICLE**

(30) Priority: 10.03.2022 CN 202210235599
(71) Applicant: Guangzhou Automobile Group Co. Ltd., Guangzhou, Guangdong 510030 (CN)
(72) Inventor: WANG, Chenxin, Guangzhou, Guangdong 511434 (CN); ZHOU, Qingqing, Guangzhou, Guangdong 511434 (CN)
(74) Representative: Zaboliene, Reda
(86) International application number: PCT/CN2022/128080
(87) International publication number: WO 2023/168953

(57) **Abstract**

An OTA power-on refresh control method for vehicle includes: receiving an OTA refresh instruction, by a vehicle T-BOX, the OTA refresh instruction being for at least one ECU and triggered by a mobile terminal; noticing a bodywork control module to enter an OTA power-on refresh mode and indicate the bodywork control module that a timing period corresponding to the refresh, by the vehicle T-BOX; activating the OTA power-on refresh mode, powering on the vehicle, entering a silent upgrade mode, by the bodywork control module, and executing an OTA upgrade to corresponding ECUs by a gateway; exiting the OTA power-on refresh mode and powering off the vehicle, by the bodywork control module, when all the ECUs finish the upgrade or the timing period is reached. A related system is also provided in the present application. The application may achieve OTA refresh when the vehicle powers on, and achieve silent upgrade, security function, and prevent feeding electricity, improving user experience and safety.

## Description

### TECHNICAL FIELD

The present disclosure relates to Over the AirTechnology (OTA) of electric vehicles technologies field, in particular to an OTA power-on refresh control method and system for vehicle.

### BACKGROUND

With the continuous development of society and the gradual growth of the consumer group of passenger vehicles, the comfort and convenience of passenger vehicles are becoming more and more important. Due to the highly integrated hardware of existing passenger vehicles (especially electric vehicles), their software is often upgraded through OTA to achieve rapid update iterations. However, design of new functions and user scenarios generally depends on the software upgrade of each ECU (Electronic Control Unit) node. For the ECUs of some special nodes, for reasons of cost and platform development, it works only when the vehicle power supply is in an ON gear. Therefore, in order to realize the OTA upgrade of these ECUs that only work when the vehicle power supply is in the ON gear, it is necessary to develop an OTA refresh mode that supports the vehicle's power-on. And as the vehicle is powered on to the ON gear, it will inevitably face a series of problems or risks in vehicle control and anti-theft.

However, in the existing technology, it is still impossible to implement OTA refresh when the vehicle is powered on, and at the same time realize vehicle silent upgrade control and anti-theft strategy, resulting in poor user experience and security.

### SUMMARY OF THE INVENTION

The present application solves technical problems, providing an OTA power-on refresh control method and system for vehicle, which may achieve OTA refresh when the vehicle is powered on, achieve silent upgrade, security function, and prevent feeding electricity, and improve user experience and safety.

One embodiment provides an OTA power-on refresh control method for vehicle includes: receiving an OTA refresh instruction, by a vehicle T-BOX, the OTA refresh instruction being for at least one ECU and triggered by a mobile terminal; noticing a bodywork control module to enter an OTA power-on refresh mode and indicating the bodywork control module that a timing period corresponding to the refresh, by the vehicle T-BOX; activating the OTA power-on refresh mode, powering on the vehicle, entering a silent upgrade mode, by the bodywork control module, and executing an OTA upgrade to corresponding ECUs by a gateway; exiting the OTA power-on refresh mode and powering off the vehicle, by the bodywork control module, when all the ECUs finish the upgrade or the timing period is reached.

Wherein entering the silent upgrade mode, specifically comprises executing at least one of: noticing a vehicle control unit (VCU) and a battery management system (BMS) that a high voltage being prohibited; controlling a black screen of an instrument panel; controlling an audio host to enter an OTA refresh notification interface; prohibiting a local light and a windscreen wiper from working; and keeping the vehicle being in an anti-theft protection state.

Wherein the method further includes: detecting whether an OTA power-on refresh condition is currently met, before the bodywork control module activating the OTA power-on refresh mode; determining the OTA power-on refresh condition is not met and feeding back to the mobile terminal through the vehicle T-BOX, if a battery level of a 12V battery of the vehicle being less than a predetermined threshold value is detected, or the light or the windscreen wiper being switched on is detected.

Wherein the method further includes: executing an anti-theft identification between the vehicle T-BOX and the bodywork control module, before the vehicle T-BOX noticing the bodywork control module to enter the OTA power-on refresh mode; executing the anti-theft identification with the VCU and the BMS, after the bodywork control module activating the OTA power-on refresh mode.

Wherein exiting the OTA power-on refresh mode and powering off the vehicle, by the bodywork control module, when all the ECUs finish the upgrade or the timing period is reached, includes: exiting the OTA power-on refresh mode and powering off the vehicle, by the bodywork control module, before the timing period is reached and if the bodywork control module receives a power off exit request, wherein the power off exit request is generated by the gateway based on the OTA refresh of all ECU nodes being finished; and powering off the vehicle and exiting the OTA power-on refresh mode, when the timing period is reached and if the bodywork control module does not receive the power off exit request from the gateway.

Wherein the method further includes: transmitting a result of the OTA power-on refresh to the mobile terminal through the vehicle T-BOX, after the bodywork control module powering off the vehicle executed.

Wherein the method further includes: controlling the vehicle to recover to a state before reset, recovering a timer to a state before reset, and continuously maintaining in the OTA power-on refresh mode, by the bodywork control module, during an OTA power-on refresh process, the bodywork control module detecting an abnormal situation of the vehicle, and after the abnormal being eliminated.

Another embodiment provides an OTA power-on refresh control system for vehicle, the system includes a vehicle T-BOX, and a mobile terminal, a bodywork control module, and a gateway communicated with the vehicle T-BOX, the vehicle T-BOX is configured to receive an OTA refresh instruction, notice the bodywork control module to enter an OTA power-on refresh mode and indicate the bodywork control module that a timing period corresponding to the refresh, the OTA refresh instruction is for at least one ECU and is triggered by the mobile terminal; the bodywork control module is configured to activate the OTA power-on refresh mode, power on the vehicle, enter a silent upgrade mode, and execute an OTA upgrade to corresponding ECUs by the gateway, and is configured to exit the OTA power-on refresh mode and power off the vehicle, when all the ECUs finish the upgrade or when the timing period is reached.

Wherein the bodywork control module further includes: a power-on refresh notice receiving module configured to receive a notice of entering the OTA power-on refresh mode from the vehicle T-BOX; an anti-theft identification processing unit configured to respectively execute an anti-theft identification between the vehicle T-BOX and a vehicle control unit (VCU) and a battery management system (BMS); a refresh condition detecting unit configured to detect whether an OTA power-on refresh condition is currently met before the bodywork control module activates the OTA power-on refresh mode; determine the OTA power-on refresh condition is not met, if a battery level of the 12V battery of the vehicle being less than a predetermined threshold value is detected, or a light or a windscreen wiper being switched on is detected; otherwise, determine the OTA power-on refresh condition is met; a silent upgrade mode executing unit configured to activate the OTA power-on refresh mode, power on the vehicle, and enter the silent upgrade mode; a power off processing unit configured to exit the OTA power-on refresh mode and power off the vehicle, when all ECUs finished the upgrade or when the timing period is reached; and a refresh feedback unit configured to transmit a result of the OTA power-on refresh to the mobile terminal through the vehicle T-BOX, after powering off the vehicle.

Wherein the silent upgrade mode specifically includes executing at least one of: noticing the VCU and the BMS that a high voltage being prohibited; controlling a black screen of an instrument panel; controlling an audio host to enter an OTA refresh notification interface; prohibiting a local light and a windscreen wiper from working; and keeping the vehicle being in an anti-theft protection state.

Wherein the bodywork control module further includes: an abnormal recovering unit configured to control the vehicle to recover to a state before reset, recover the timer to a state before reset, and continuously maintain in the OTA power-on refresh mode, during an OTA power-on refresh process, the bodywork control module detecting an abnormal situation of the vehicle, and after the abnormal being eliminated.

The embodiments of the present application have beneficial effects as follows:
The present application provides an OTA power-on refresh control method and system for vehicle, applied in a scene of OTA power-on refresh of the power-on vehicle. The present application through the vehicle T-BOX noticing the bodywork control module to enter the OTA power-on refresh mode, and carries the timing period corresponding to this refresh; the bodywork control module activates the OTA power-on refresh mode, powers on the vehicle, enters the silent upgrade mode, and executes the OTA upgrade to corresponding ECU through the gateway; when all the ECUs finish the upgrade or reaching the timing period, the bodywork control module exits the OTA power-on refresh mode, and powers off the vehicle. The present application may solve OTA upgrade requirements of vehicle power-on of multiple ECU nodes in an intelligent driving system, meanwhile realizing silent upgrade, which is broadly used and providing great upgrade experience for the vehicle user.

At the same time, during the upgrade process, the vehicle security and abnormal recovering function can be realized, improving a safety of the vehicle upgrade process.

Additionally, since aiming at the timing period set for each upgrade, when all the ECUs finish the upgrade or the timing period is reached, the bodywork control module exits the OTA power-on refresh mode, and powers off the vehicle, which may prevent too long refresh time or risk of feeding electricity caused by failure.

### BRIEF DESCRIPTION OF THE DRAWINGS

FIG. 1 is a flow chart of an embodiment of the present application of an OTA power-on refresh control method for vehicle.
FIG. 2 is a schematic diagram of an application environment of FIG. 1.
FIG. 3 is a schematic diagram of an embodiment of the present application of an OTA power-on refresh control system for vehicle.
FIG. 4 is a schematic diagram of vehicle control module of FIG. 3.

### DETAILED DESCRIPTION

Technical schemes of the present application will be further described below in conjunction with the accompanying drawings and through specific embodiments.

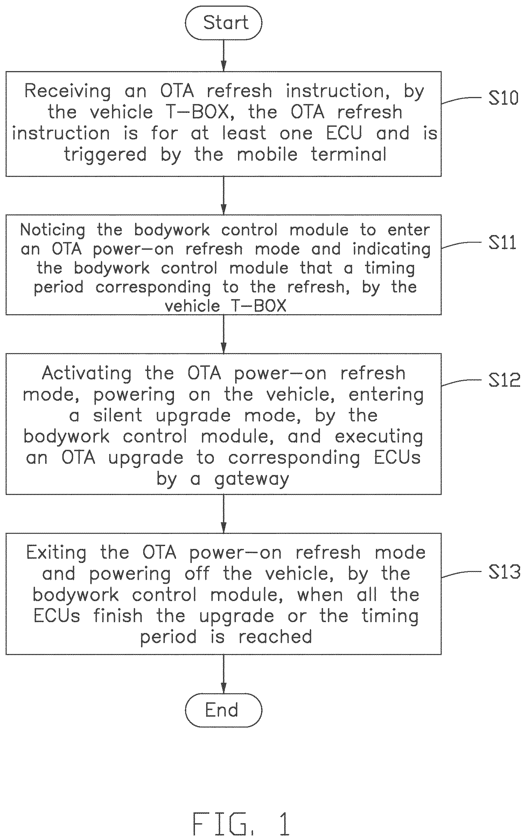

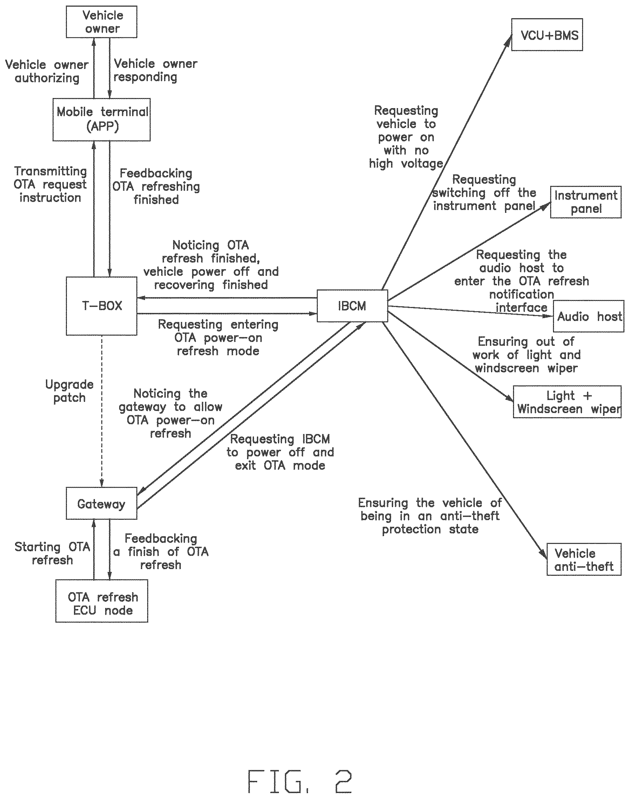

As shown in FIG. 1, a flow chart of an embodiment of the present application of an OTA power-on refresh control method for vehicle. Referring to FIG. 2 too, the method may be applied in a system including a vehicle T-BOX, a mobile terminal, a bodywork control module, a gateway, etc. The bodywork control module may be an integrated bodywork control module (IBCM). In the present embodiment, the method at least includes following:

At block S10, receiving an OTA refresh instruction, by the vehicle T-BOX, the OTA refresh instruction is for at least one ECU and is triggered by the mobile terminal. In detail, the mobile terminal may generate the OTA refresh instruction in response to user's operation to application software installed therein. For instance, after a backstage server generated an upgrade patch of at least one ECU, the backstage server may issue push notification to the application software of several mobile terminals, the application software of the application software may response to user's operations (such as clicking a button for executing upgrade), and transmit the OTA refresh instruction of at least one ECU to corresponding the vehicle T-BOX to authorize executing vehicle OTA power-on upgrade program.

At block S11, noticing the bodywork control module to enter an OTA power-on refresh mode and indicating the bodywork control module that a timing period corresponding to the refresh, by the vehicle T-BOX.

In the present embodiment, when the vehicle T-BOX notices the bodywork control module to enter the OTA power-on refresh mode, the vehicle T-BOX may set the timing period, which can be executed by a timer instruction signal, different ECUs have different refresh timing periods, such as, in an example, the timing period may be one hour, ensuring the vehicle may not occur situation of feeding electricity due to OTA power-on refresh.

It should be known that, before the vehicle T-BOX notices the bodywork control module to enter the OTA power-on refresh mode, the method further includes executing an anti-theft identification between the vehicle T-BOX and the bodywork control module, to ensure the OTA refresh instruction is authorized by the user.

At block S12, activating the OTA power-on refresh mode, powering on the vehicle, entering a silent upgrade mode, by the bodywork control module, and executing an OTA upgrade to corresponding ECUs by a gateway.

Before the bodywork control module activates the OTA power-on refresh mode, whether an OTA power-on refresh condition is currently met is needed to be detected. In detail, if a battery level of a 12V battery of the vehicle is less than a predetermined threshold value (such as 70%) is detected, or a light or a windscreen wiper being switched on is detected, then the OTA power-on refresh condition is not met, the vehicle T-BOX feeds back the detection to the mobile terminal. It should be known that, if the battery level of the 12V battery of the vehicle is less than 70% is determined, noticing a BMS to execute a reserved charging function of an OFF gear, then executing the OTA power-on refresh of vehicle. In addition, since there are actual buttons for the light and the windscreen wiper, and according to actual laws and regulations requirements, when the vehicle is in an ON gear, if the light and the windscreen wiper are switched on, which work normally. In the present embodiment, when the bodywork control module executes an OTA power-on instruction, determining the light or the windscreen wiper are not in the switched-on state, otherwise the condition for OTA power-on refresh is not met, feeding back a failure of the vehicle execution.

After the bodywork control module activates the OTA power-on refresh mode, executing the anti-theft identification with a vehicle control unit (VCU) and the battery management system (BMS).

In detail, in the present embodiment, after entering the silent upgrade mode, specifically includes executing at least one of:
Noticing the VCU and the BMS that a high voltage being prohibited when executing power on the vehicle.

Controlling a black screen of an instrument panel.

Controlling an audio host to enter an OTA refresh notification interface, to maximally decreasing the vehicle performance.

Prohibiting the light and the windscreen wiper from working. In detail, if the switch of the light and the windscreen wiper is in an AUTO gear, the bodywork control module forwardly shields a logic of auto switching on the light and the windscreen wiper after receiving the OTA power-on instruction, ensuring the vehicle being in the silent upgrade state.

Keeping the vehicle being in the anti-theft protection status.

In detail, a precondition for the bodywork control module enters the OTA power-on refresh is the vehicle is locked. When the bodywork control module enters the OTA power-on refresh mode, the bodywork control module shields a vehicle unlock function, the driver cannot open the vehicle door in a short time. The bodywork control module is still in the vehicle anti-theft state when during the OTA power-on refresh mode, if a thief tries to open the door at this time, the bodywork control module may execute an anti-theft alarm, and notice the owner of the vehicle to pay attention to the vehicle anti-theft through message application program.

At the same time, the bodywork control module starts to time according to the timing period given by the vehicle T-BOX, and maintains the vehicle is in the ON gear state.

In the present embodiment, the block S12 of executing the OTA upgrade to corresponding ECU through the gateway further includes:
After the bodywork control module entered the OTA power-on refresh mode, noticing the gateway to allow the corresponding ECU node to execute the OTA power-on refresh, by the bodywork control module.

The gateway receives the notice, and then obtains the upgrade patch of the corresponding ECU node from the vehicle T-BOX, then executes the refresh to the corresponding ECU node.

The ECU node reports a finish state of OTA refresh to the gateway after finishing the refresh.

The gateway requests the bodywork control module to power off and exit the OTA power-on refresh mode, after receiving the state reported by all ECU nodes related to the upgrade.

At block S13, exiting the OTA power-on refresh mode and powering off the vehicle, by the bodywork control module, when all the ECUs finish the upgrade or the timing period is reached.

In detail, the block S13 further includes:
Before the timing period is reached, if the bodywork control module receives the power off exit request generated based on all ECU nodes finished the OTA refresh from the gateway, the bodywork control module exits the OTA power-on refresh mode, and powers off the vehicle.

When the timing period is reached, if the bodywork control module does not receive the power off exit request from the gateway, the bodywork control module powers off the vehicle, and exits the OTA power-on refresh mode. In other embodiments, when the timing period is reached, the bodywork control module further determines a progress of the ECU node refresh, if the progress exceeds a predetermined threshold (such as 80%), and further activates a second timing period (such as 10 minutes), to continue the refresh, when the second timing period is reached, if the bodywork control module does not receive the exit request from the gateway, the bodywork control module powers off the vehicle, and exits the OTA power-on refresh mode.

It should be known that, the method further includes:
The bodywork control module transmits the result of the OTA power-on refresh to the mobile terminal through the vehicle T-BOX, after powering off the vehicle.

Wherein, the bodywork control module includes an abnormal recovering function. In detail, internal hardware of the bodywork control module includes a short time reset storage function. During the OTA power-on refresh process, the bodywork control module detects an abnormal situation of the vehicle, after the abnormal being eliminated, the bodywork control module recovers the vehicle to a state before reset, recovers the timer to a state before reset, and continuously maintains in the OTA power-on refresh mode and maintains all functions.

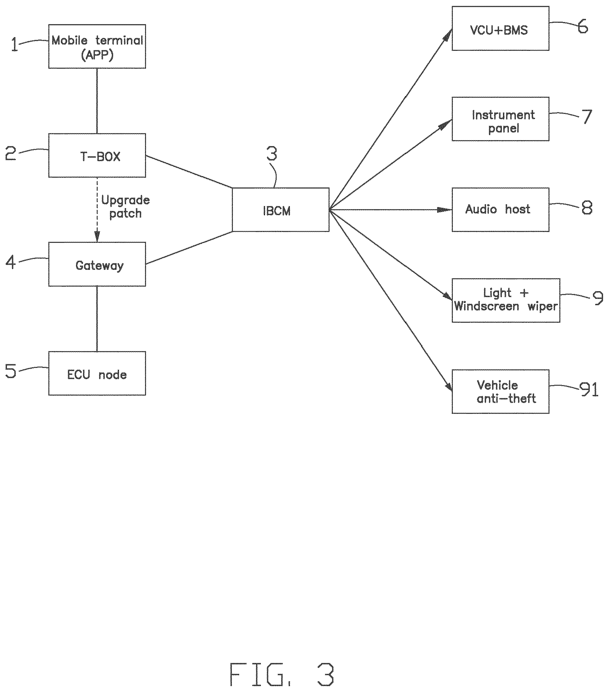

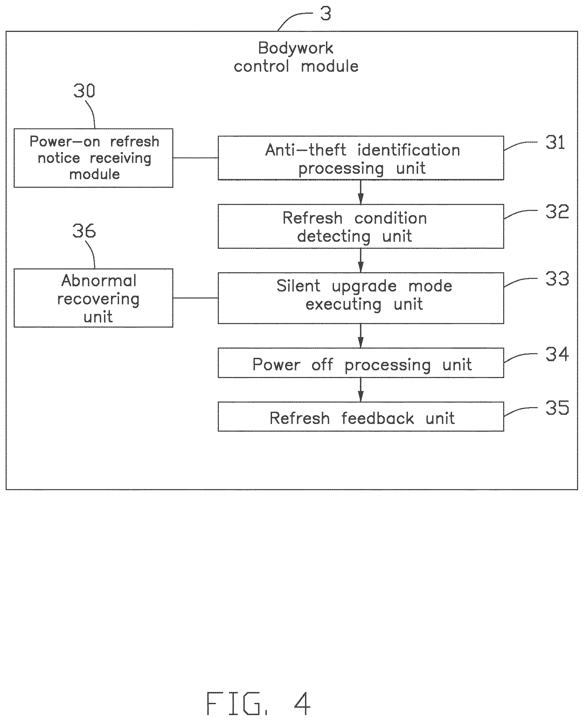

As shown in FIG. 3, illustrating schematic diagram of an embodiment of the present application of an OTA power-on refresh control method for vehicle. Referring to FIG. 4, in the present embodiment, the system at least includes a vehicle T-BOX 2, and a mobile terminal 1, a bodywork control module 3, and a gateway 4 communicated with the vehicle T-BOX 2. Wherein:
The vehicle T-BOX 2 is configured to receive an OTA refresh instruction, notice the bodywork control module 3 to enter the OTA power-on refresh mode and indicate the bodywork control module 3 that the timing period corresponding to the refresh, the OTA refresh instruction is for at least one ECU node 5 and is triggered by the mobile terminal 1.

The bodywork control module 3 is configured to activate the OTA power-on refresh mode, power on the vehicle, enter the silent upgrade mode, and execute an OTA upgrade to corresponding ECU node 5 through the gateway 4. The bodywork control module 3 is further configured to exit the OTA power-on refresh mode and power off the vehicle, when all the ECU nodes 5 finish the upgrade or when the timing period is reached.

Referring to FIG. 4, the bodywork control module 3 further includes:
A power-on refresh notice receiving module 30 configured to receive a notice of entering the OTA power-on refresh mode from the vehicle T-BOX.

An anti-theft identification processing unit 31 configured to respectively execute the anti-theft identification between the vehicle T-BOX and the vehicle control unit (VCU) and the battery management system (BMS).

A refresh condition detecting unit 32 configured to detect whether an OTA power-on refresh condition is currently met before the bodywork control module activates the OTA power-on refresh mode. If the battery level of the 12V battery of the vehicle being less than the predetermined threshold value is detected, or a light or a windscreen wiper being switched on is detected, then determine the OTA power-on refresh condition is not met; otherwise, determine the condition for OTA power-on refresh condition is met.

A silent upgrade mode executing unit 33 configured to activate the OTA power-on refresh mode, power on the vehicle, and enter the silent upgrade mode. The silent upgrade mode further includes: noticing the VCU and the BMS to prohibit from high voltage; controlling a black screen of the instrument panel; controlling the audio host to enter the OTA refresh notification interface; prohibiting the light and the windscreen wiper from working; and keeping the vehicle being in the anti-theft protection status.

A power off processing unit 34 configured to exit the OTA power-on refresh mode and power off the vehicle, when all ECUs finished the upgrade or the timing period ends. In detail, before the timing period is reached, if the bodywork control module receives the power off exit request generated after all ECU nodes finished the OTA refresh from the gateway, the bodywork control module exits the OTA power-on refresh mode, and powers off the vehicle. Or when the timing period is reached, if the bodywork control module does not receive the power off exit request from the gateway, the bodywork control module exits the OTA power-on refresh mode, and powers off the vehicle.

A refresh feedback unit 35 configured to transmits a result of the OTA power-on refresh to the mobile terminal through the T-BOX, after powering off the vehicle.

Furthermore, the bodywork control module 3 further includes:
An abnormal recovering unit 36 configured to recovering the vehicle to a state before reset, recover the timer to a state before reset, and continuously maintain in the OTA power-on refresh mode, during an OTA power-on refresh process, the bodywork control module detecting an abnormal situation of the vehicle, and after the abnormal being eliminated.

More details can be referred to and combined the descriptions to FIGS. 1 and 2, not repeated here.

The embodiments of the present application have beneficial effects as follows:
The present application provides an OTA power-on refresh control method and system for vehicle, applied in a scene of OTA power-on refresh of the power-on vehicle. The present application through the vehicle T-BOX noticing the bodywork control module to enter the OTA power-on refresh mode and indicating the bodywork control module that the timing period corresponding to the refresh; the bodywork control module activates the OTA power-on refresh mode, powers on the vehicle, enters the silent upgrade mode, and executes the OTA upgrade to corresponding ECU through the gateway; when all the ECUs finish the upgrade or when the timing period is reached, the bodywork control module exits the OTA power-on refresh mode, and powers off the vehicle. The present application may solve OTA upgrade requirements of vehicle power-on of multiple ECU nodes in an intelligent driving system, meanwhile realizing silent upgrade, which is broadly used and providing great upgrade experience for the vehicle user.

At the same time, during the upgrade process, the vehicle security and abnormal recovering function can be realized, improving a safety of the vehicle upgrade process.

Additionally, since aiming at the timing period set for each upgrade, when all the ECUs finish the upgrade or when the timing period is reached, the bodywork control module exits the OTA power-on refresh mode, and powers off the vehicle, which may prevent too long refresh time or risk of feeding electricity caused by failure.

Those skilled in the art should understand that the embodiments of the present application may be provided as methods, apparatuses, or computer program products. Accordingly, the present application may take the form of an entirely hardware embodiment, an entirely software embodiment, or an embodiment combining software and hardware aspects. Furthermore, the present application may take the form of a computer program product embodied on one or more computer-usable storage media (including but not limited to disk storage, CD-ROM, optical storage, etc.) having computer-usable program code embodied therein.

The present application is described with reference to flowcharts and/or block diagrams of methods, devices (systems), and computer program products according to embodiments of the present application. It should be understood that each process and/or block in the flowchart and/or block diagram, and a combination of processes and/or blocks in the flowchart and/or block diagram can be realized by computer program instructions. These computer program instructions may be provided to a general purpose computer, a special purpose computer, an embedded processor, or a processor of other programmable data processing equipment to produce a machine, thus the instructions executed by the processor of the computer or other programmable data processing equipment, generate means for realizing the functions specified in one or more processes of the flowchart and/or one or more blocks of the block diagram.

What is disclosed above is only a preferred embodiment of the application, and it cannot limit the scope of rights of the application. Therefore, the equivalent changes made according to the claims of the application still belong to the scope covered by the application.

## Claims

1. An OTA power-on refresh control method for vehicle, the method comprising:
receiving an OTA refresh instruction, by a vehicle T-BOX, the OTA refresh instruction being for at least one ECU and triggered by a mobile terminal;
noticing a bodywork control module to enter an OTA power-on refresh mode and indicating the bodywork control module that a timing period corresponding to the refreshing, by the vehicle T-BOX;
activating the OTA power-on refresh mode, powering on the vehicle, entering a silent upgrade mode, by the bodywork control module, and executing an OTA upgrade to corresponding ECUs by a gateway;
exiting the OTA power-on refresh mode and powering off the vehicle, by the bodywork control module, when all the ECUs finish the upgrade or the timing period is reached.

2. The method according to claim 1, wherein entering the silent upgrade mode, specifically comprises executing at least one of:
noticing a vehicle control unit (VCU) and a battery management system (BMS) that a high voltage being prohibited;
controlling a black screen of an instrument panel;
controlling an audio host to enter an OTA refreshing notification interface;
prohibiting a local light and a windscreen wiper from working; and
keeping the vehicle being in an anti-theft protection status.

3. The method according to any one of claims 1 or 2, further comprising:
detecting whether an OTA power-on refresh condition is currently met, before the bodywork control module activating the OTA power-on refresh mode;
determining the OTA power-on refresh condition is not met and feeding back to the mobile terminal through the vehicle T-BOX, if a battery level of a 12V battery of the vehicle being less than a predetermined threshold value is detected, or the light or the windscreen wiper being switched on is detected.

4. The method according to claim 3, further comprising:
executing an anti-theft identification between the vehicle T-BOX and the bodywork control module, before the vehicle T-BOX noticing the bodywork control module to enter the OTA power-on refresh mode;
executing the anti-theft identification with the VCU and the BMS, after the bodywork control module activating the OTA power-on refresh mode.

5. The method according to claim 4, wherein exiting the OTA power-on refresh mode and powering off the vehicle, by the bodywork control module, when all the ECUs finish the upgrade or the timing period is reached, comprises:
exiting the OTA power-on refresh mode and powering off the vehicle, by the bodywork control module, before the timing period is reached and if the bodywork control module receives a power off exit request, wherein the power off exit request is generated by the gateway based on the OTA refresh of all ECU nodes being finished;
powering off the vehicle and exiting the OTA power-on refresh mode, when the timing period is reached and if the bodywork control module does not receive the power off exit request from the gateway.

6. The method according to claim 5, further comprising:
transmitting a result of the OTA power-on refresh to the mobile terminal through the vehicle T-BOX, after the bodywork control module powering off the vehicle executed.

7. The method according to claim 6, further comprising:
controlling the vehicle to recover to a state before reset, recovering a timer to a state before reset, and continuously maintaining in the OTA power-on refresh mode, by the bodywork control module, during an OTA power-on refresh process, the bodywork control module detecting an abnormal situation of the vehicle, and after the abnormal being eliminated.

8. An OTA power-on refresh control system, the system comprising a vehicle T-BOX, and a mobile terminal, a bodywork control module, and a gateway communicated with the vehicle T-BOX, wherein:
the vehicle T-BOX is configured to receive an OTA refresh instruction, notice the bodywork control module to enter an OTA power-on refresh mode and indicate the bodywork control module that a timing period corresponding to the refresh, the OTA refresh instruction is for at least one ECU and is triggered by the mobile terminal;
the bodywork control module is configured to activate the OTA power-on refresh mode, power on the vehicle, enter a silent upgrade mode, and execute an OTA upgrade to corresponding ECUs by the gateway, and is configured to exit the OTA power-on refresh mode and power off the vehicle, when all the ECUs finish the upgrade or when the timing period is reached.

9. The system according to claim 8, wherein the bodywork control module further comprises:
a power-on refresh notice receiving module configured to receive a notice of entering the OTA power-on refresh mode from the vehicle T-BOX;
an anti-theft identification processing unit configured to execute an anti-theft identification between the vehicle T-BOX and a vehicle control unit (VCU) and a battery management system (BMS);
a refresh condition detecting unit configured to detect whether an OTA power-on refresh condition is currently met before the bodywork control module activates the OTA power-on refresh mode; determine the OTA power-on refresh condition is not met, if a battery level of the 12V battery of the vehicle being less than a predetermined threshold value is detected, or a light or a windscreen wiper being switched on is detected; otherwise, determine the OTA power-on refresh condition is met;
a silent upgrade mode executing unit configured to activate the OTA power-on refresh mode, power on the vehicle, and enter the silent upgrade mode;
a power off processing unit configured to exit the OTA power-on refresh mode and power off the vehicle, when all ECUs finished the upgrade or when the timing period is reached; and
a refresh feedback unit configured to transmits a result of the OTA power-on refresh to the mobile terminal through the T-BOX, after powering off the vehicle.

10. The system according to claim 9, wherein the silent upgrade mode specifically comprises executing at least one of:
noticing the VCU and the BMS that a high voltage being prohibited;
controlling a black screen of an instrument panel;
controlling an audio host to enter an OTA refresh notification interface;
prohibiting a local light and a windscreen wiper from working; and
keeping the vehicle being in an anti-theft protection status.

11. The system according to claim 10, wherein the bodywork control module further comprises:
an abnormal recovering unit configured to control the vehicle to recover to a state before reset, recover the timer to a state before reset, and continuously maintain in the OTA power-on refresh mode, during an OTA power-on refresh process, the bodywork control module detecting an abnormal situation of the vehicle, and after the abnormal being eliminated.
